# EUROPÄISCHE PATENTANMELDUNG

(11) **EP 3 587 096 A1**
(43) Veröffentlichungstag der Anmeldung: **01.01.2020**
(21) Anmeldenummer: 19179366.0
(22) Anmeldetag: 11.06.2019
(51) Int. Cl.: B32B 3/12, B32B 5/02, B32B 5/18, B32B 5/24, B32B 5/26, B32B 27/40

(54) **FAHRZEUGAUSSENFLÄCHENBAUTEIL UND VERFAHREN ZUM HERSTELLEN EINES FAHRZEUGAUSSENFLÄCHENBAUTEILS**

(30) Priorität: 25.06.2018 DE 102018115242
(71) Anmelder: Webasto SE, 82131 Stockdorf (DE)
(72) Erfinder: KIESEWETTER, Frank, 82131 Stockdorf (DE); SVIBERG, Magnus, 82131 Stockdorf (DE); BAUMANN, Matthias, 82131 Stockdorf (DE)
(74) Vertreter: Fischer & Konnerth

(57) **Zusammenfassung**

Die Erfindung betrifft ein Fahrzeugaußenflächenbauteil mit einem Schichtaufbau mit einer eine Außenhautschicht (8) bildenden SMC-Schicht (9) und mit einer mit der SMC-Schicht (9) verbundenen und eine Kernschicht (3) aufweisenden Verstärkungsstruktur (2), dadurch gekennzeichnet, dass auf der SMC-Schicht (9) au-βenseitig eine IMC-TOPcoat-Schicht (10) mit Class-A-Oberflächenqualität angebracht ist, die gemeinsam mit der SMC-Schicht (9) die Außenhautschicht (8) bildet, sowie ein Verfahren zum Herstellen eines Fahrzeugaußenflächenbauteils (1).

## Beschreibung

Die Erfindung betrifft ein Fahrzeugaußenflächenbauteil mit einem Schichtaufbau mit einer eine Außenhautschicht bildenden SMC-Schicht und mit einer mit der SMC-Schicht verbundenen und eine Kernschicht aufweisenden Verstärkungsstruktur sowie ein Verfahren zum Herstellen eines Fahrzeugaußenflächenbauteils.

Ein solches Fahrzeugaußenflächenbauteil ist beispielsweise ein Deckel eines Dachöffnungssystems wie eines Schiebedaches oder eines Spoilerdaches, ein Flächenbauteil eines Dachmoduls oder ein Verkleidungsbauteil eines Fahrzeugs.

Aus der EP 1 524 175 A2 ist ein Fahrzeugaußenflächenbauteil bekannt geworden, das eine Außenschale aus einem Kunststoff mit hoher Oberflächengüte, z. B. aus einem SMC-Material, und eine innenseitig flächig an der Außenschale anliegende Verstärkungsstruktur aufweist. Die Verstärkungsstruktur besteht aus zwei zueinander beabstandeten Kunststoffschichten, zwischen denen eine Wabenstruktur oder ein schaumartiger Werkstoff vorgesehen ist. Die Außenschale aus einem Kunststoff mit hoher Oberflächengüte ermöglicht eine Lackierung analog einem Blechbauteil. Ein nachgelagerter Lackierprozess verursacht jedoch hohe Kosten, die die Herstellung eines solchen Fahrzeugaußenflächenbauteils unwirtschaftlich machen können.

Der Erfindung liegt die Aufgabe zugrunde, ein eingangs genanntes Fahrzeugaußenflächenbauteil zu schaffen, das bei hoher Bauteilqualität kostengünstig herzustellen ist, sowie ein Verfahren zum Herstellen eines solchen Fahrzeugaußenflächenbauteils anzugeben.

Diese Aufgabe wird bei dem eingangs genannten Fahrzeugaußenflächenbauteil erfindungsgemäß dadurch gelöst, dass auf der SMC-Schicht außenseitig eine IMC-TOPcoat-Schicht angebracht ist, die gemeinsam mit der SMC-Schicht die Außenhautschicht bildet.

Die Aufgabe wird des Weiteren durch ein Verfahren mit den Merkmalen des Anspruchs 8 wie auch durch ein Verfahren mit den Merkmalen des Anspruchs 10 gelöst.

Vorteilhafte Ausgestaltungen der Erfindung sind jeweils in den abhängigen Ansprüchen angegeben.

Die außenseitige IMC-TOPcoat-Schicht, die insbesondere aus einem Polyurethan oder einem 2K Polyurethanlack oder dergleichen hergestellt ist, ersetzt einen ansonsten eingesetzten IMC-Primer, der eine Grundierung für eine nachfolgende Lackierung bildet, sowie auch eine Lackierung. Die SMC-Schicht mit der darauf aufgebrachten IMC-TOPcoat-Schicht bildet somit die Außenhautschicht in Class-A-Oberflächenqualität. Class-A-Oberflächenqualität stellt eine höchste Oberflächenqualität dar.

Die SMC-Schicht ist vorzugsweise mit einer Schichtdicke von etwa 1,0 mm bis 2,5 mm gebildet. Die Dicke der SMC-Schicht ist derart gewählt, dass sie die darunter liegende Struktur qualitativ hochwertig abdeckt, so dass keine Unebenheiten oder dergleichen an der von der IMC-TOPcoat-Schicht bedeckten Oberfläche der SMC-Schicht auftreten oder erkennbar sind.

Eine Hochglanzoberfläche erhält man entweder durch eine entsprechende Hochglanzoberfläche im Werkzeug oder durch nachträgliche Politur des Bauteiles. In diesem Fall ist eine größere Schichtstärke der IMC-TOPcoat-Schicht von z. B. etwa 120 µm (0,120 mm) bis 140 µm (0,140 mm) zweckmäßig.

Man erhält entsprechend der Werkzeugoberfläche hochglänzende, matte oder strukturierte Bauteiloberflächen. Es können vorzugsweise Kontrastfarben dargestellt werden. Andererseits kann auch die Farbe der Farblackierung des Fahrzeugs verwendet werden.

Das erfindungsgemäße Fahrzeugaußenflächenbauteil weist zahlreiche Vorteile auf:
- Entfall einer aufwendigen und teuren Lackierung;
- Entfall eines Logistikaufwands, falls ansonsten mit externem Lackierbetrieb gearbeitet wird;
- Hervorragender Leichtbaufaktor: Flächengewichte in Abhängigkeit der geforderten Gesamtbauteilsteifigkeiten von z. B. unter 4 kg/m² sind möglich (abhängig von der Applikation);
- mit einem Werkzeug können unterschiedliche Farben der Außenhautschicht bzw. des Bauteils hergestellt werden;
- Mit einem Unterwerkzeug und unterschiedlichen Oberwerkzeugen können unterschiedliche Strukturen der Oberflächen erzeugt werden.

Die SMC-Schicht entkoppelt von der Verstärkungsstruktur, insbesondere von einer Kernschicht, die von einer Wabe (z. B. PHC) gebildet ist. Es sind keine weiteren Entkopplungsschichten notwendig. Auch partiell verstärkte oder ausgedünnte Bereiche sind an der Oberfläche nicht zu sehen. In Kombination mit der IMC-TOPcoat-Schicht sind Class-A-Bauteile herstellbar, die in der hohen Qualität dem Werkzeug entnommen werden können.

Die SMC-Schicht mit der darauf angebrachten IMC-TOPcoat-Schicht ist derart gebildet, dass sie hohe Kratzfestigkeit, hohe UV-Beständigkeit und große Farbechtheit aufweist. Bei dem Herstellungsverfahren können z. B. durch Steuerung des Einspritzzeitpunktes in das Werkzeug diese Materialeigenschaften und insbesondere die Haftung oder Haftfähigkeit der IMC-TOPcoat-Schicht beeinflusst werden.

Zweckmäßigerweise enthält die Verstärkungsstruktur eine innere Kunststoff-Deckschicht, die überwiegend Polyurethan enthält oder aus Polyurethan hergestellt ist und an der Kernschicht auf ihrer der Außenhautschicht gegenüberliegenden Innenseite angebracht ist. Das Befestigen der Kunststoff-Deckschicht an der Kernschicht erfolgt mittels des Polyurethans als Klebstoff, das für eine innige Verbindung mit der Kernschicht sorgt und in diese bei hierfür geeignetem Material eindringen kann. An der Bauteil-Innenseite kann direkt ein Stoff kaschiert werden.

In bevorzugter Gestaltung ist die Außenhautschicht mittels einer äußeren Kunststoff-Deckschicht, die überwiegend Polyurethan enthält oder aus Polyurethan hergestellt ist, an der der Außenhautschicht zugewandten Außenseite der Kernschicht angebracht. Die äußere Kunststoff-Deckschicht kann eine Verstärkung z. B. durch eine Faserverstärkung oder eine Fasermatte aufweisen, wodurch die Festigkeit erhöht wird. Für das Anbringen der Außenhaut kann sowohl eine derart verstärkte äußere Kunststoff-Deckschicht wie auch eine ohne diese Verstärkung vorgesehene äußere Kunststoff-Deckschicht verwendet werden.

Es ist besonders bevorzugt, dass die innere Kunststoff-Deckschicht und/oder die äußere Kunststoff-Deckschicht eine Faserverstärkung, z. B. mit Glasfasern, oder eine Fasermatte aufweist. Die wahlweise Verwendung einer Faser- oder Fasermattenverstärkung gestattet eine bestimmte Gestaltung der unterschiedlichen Schichten im Hinblick auf eine optimierte hohe Festigkeit, insbesondere Biegefestigkeit oder Festigkeit z. B. gegen Hagelschlag. Der Kunststoff bzw. das Polyurethan bildet im Wesentlichen den Klebstoff, während die Faserverstärkung die erforderliche Festigkeit bietet.

Eine besonders bevorzugte Ausführungsform sieht vor, dass die Kernschicht der Verstärkungsstruktur aus einer Wabe oder einem Schaumstoff hergestellt ist. Dabei kann die Wabe bevorzugt aus Papier (PHC), aus Aluminium oder aus einem Kunststoff wie z. B. Phenolharz hergestellt sein. Als Wabe werden auch z. B. wellenförmig verlaufende Bauteile oder Abstandsteile, die senkrecht zur zumindest einen Kunststoff-Deckschicht verlaufen, verstanden.

Durch ein erfindungsgemäßes Verfahren gemäß Anspruch 8 kann ein qualitativ hochwertiges Fahrzeugaußenflächenbauteil hergestellt werden, wie es insbesondere voranstehend beschrieben ist. Das Verfahren zum Herstellen eines Fahrzeugaußenflächenbauteils, das insbesondere gemäß den voranstehenden Ausführungen gebildet ist, enthält die Schritte:
a) Herstellen einer SMC-Schicht inklusive einer IMC-TOPcoat-Schicht mit Class-A-Oberflächenqualität als ein eine Außenhautschicht bildendes Halbzeug in einem Standardherstellungsverfahren für SMC-Bauteile,
b) Einlegen der Außenhautschicht in eine Werkzeughälfte eines Composite-Werkzeuges,
c) Einpressen einer die Außenhautschicht tragenden Verstärkungsstruktur, die eine von zumindest einer Kunststoff-Deckschicht abgedeckte Kernschicht aufweist, mit noch unvernetztem Klebstoff oder Polyurethan in die SMC-Schicht der Außenhautschicht unter Formgebung des Fahrzeugaußenflächenbauteils, und
d) Entformen des mit hochqualitativ fertiggestellter Außenhaut erzeugten Fahrzeugaußenflächenbauteils.

Zweckmäßigerweise kann im Anschluss an das Entformen des Fahrzeugaußenflächenbauteils (Schritt d) zumindest ein weiterer Verfahrensschritt wie das Trimmen oder Zuschneiden der Kanten des Fahrzeugaußenflächenbauteils durchgeführt werden.

Des Weiteren kann durch ein erfindungsgemäßes Verfahren gemäß Anspruch 10 ebenfalls ein qualitativ hochwertiges Fahrzeugaußenflächenbauteil hergestellt werden. Dabei werden die folgenden Schritte ausgeführt:
a) Herstellen einer SMC-Schicht als Halbzeug in einem Standardherstellungsverfahren für SMC-Bauteile,
b) Einlegen der SMC-Schicht in eine erste Werkzeughälfte eines Formwerkzeuges und Pressen der SMC-Schicht mit Hilfe einer zweiten Werkzeughälfte,
c) Aufbringen einer IMC-TOPcoat-Schicht mit Class-A-Oberflächenqualität auf die der ersten Werkzeughälfte zugewandten SMC-Schicht zur Bildung einer Außenhautschicht,
d) Austauschen der zweiten Werkzeughälfte gegen eine Werkzeughälfte mit vergrößertem Formhohlraum,
e) Einlegen einer die Außenhautschicht tragenden Verstärkungsstruktur, die eine von zumindest einer Kunststoff-Deckschicht abgedeckte Kernschicht aufweist, in den vergrößerten Formhohlraum,
f) Einpressen der Verstärkungsstruktur mit noch unvernetztem Klebstoff oder Polyurethan in die SMC-Schicht der Außenhautschicht unter Formgebung des Fahrzeugaußenflächenbauteils, und
g) Entformen des mit hochqualitativ fertiggestellter Außenhaut erzeugten Fahrzeugaußenflächenbauteils.

Die IMC-TOPcoat-Schicht ist insbesondere aus einem Polyurethan oder einem 2K Polyurethanlack oder dergleichen hergestellt.

Wie beim erstgenannten Verfahren kann nach dem Entformen ein weiterer Verfahrensschritt vorgenommen werden. Eine Lackierung ist nicht vorgesehen und auch nicht erforderlich.

Nachfolgend wird die Erfindung anhand eines Ausführungsbeispiels eines erfindungsgemäßen Fahrzeugaußenflächenbauteils unter Bezugnahme auf die Zeichnung näher erläutert. Es zeigt:

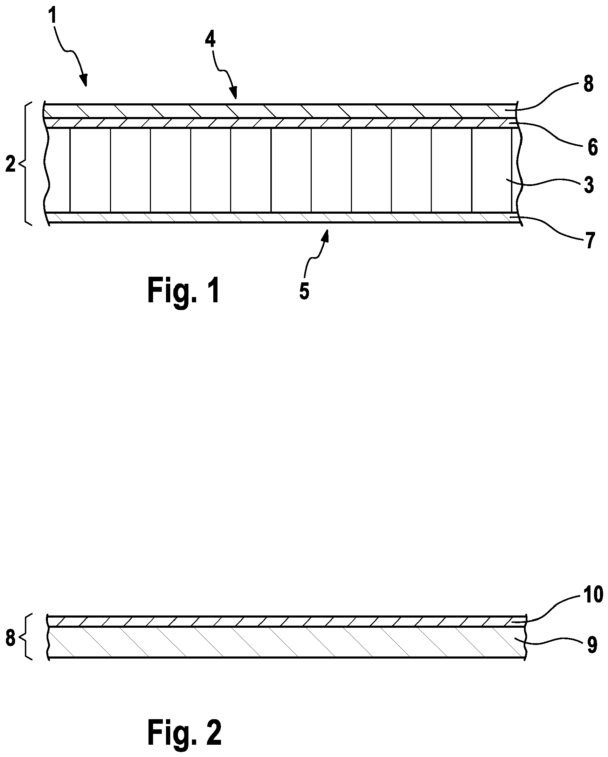

- Fig. 1: in einer Schnittansicht ein erfindungsgemäßes Fahrzeugaußenflächenbauteil;
- Fig. 2: in einer Schnittansicht eine Außenhautschicht des Fahrzeugaußenflächenbauteils der Fig.1;
- Fig. 3: in einer Schnittansicht ein Formwerkzeug mit zwei geschlossenen Werkzeughälften und einem darin angeordneten SMC-Halbzeug des Fahrzeugaußenflächenbauteils während eines ersten Herstellungsschrittes; und
- Fig. 4: in einer Schnittansicht das Formwerkzeug mit einer zweiten ausgetauschten Werkzeughälfte und einem darin angeordneten Fahrzeugaußenflächenbauteil während eines zweiten Herstellungsschrittes.

Ein Fahrzeugaußenflächenbauteil 1, das z. B. ein Deckel eines Dachmoduls oder eines öffnungsfähigen Daches wie eines Schiebedaches ist, weist eine Verstärkungsstruktur 2 mit einer Kernschicht 3 auf, die aus einer Wabe, z. B. einer Papierwabe (PHC paper honey comb), oder aus einem Schaumstoff hergestellt ist. Die Kernschicht 3 ist bevorzugt beidseits, d. h. zur Bauteil-Außenseite 4 wie auch zur Bauteil-Innenseite 5 des Fahrzeugaußenflächenbauteils 1 hin, jeweils mit einer Kunststoff-Deckschicht 6 bzw. 7 versehen. Die äußere Kunststoff-Deckschicht 6 wie auch die innere Kunststoff-Deckschicht 7 enthalten eine dünne Klebstoffschicht oder sind von einer solchen gebildet, die insbesondere aus Polyurethan besteht, und enthalten insbesondere eine verstärkende Faserschicht oder Fasermatte, die z. B. aus einem Faserwerkstoff mit Basaltfasern, Kohlefasern, Naturfasern oder Glasfasern besteht.

Eine Außenhautschicht 8 des Fahrzeugaußenflächenbauteils 1 ist mittels des Kunststoffes oder Polyurethans der äußeren Kunststoff-Deckschicht 6 mit der Verstärkungsstruktur 2 bzw. der Kernschicht 3 verbunden. Die Außenhautschicht 8 ist aus einer inneren Schicht und einer äußeren Schicht gebildet. Die innere Schicht ist eine dünne SMC-Schicht 9 mit einer Dicke von bevorzugt etwa 1,0 mm bis 2,5 mm. Die äußere Schicht ist eine IMC-TOPcoat-Schicht 10 (IMC In Mold Coat) einer Dicke von bevorzugt etwa 60 bis 140 µm (0,060 bis 0,140 mm).

Die IMC-TOPcoat-Schicht 10 ist eine hochqualitative Schicht, so dass eine nachträgliche Lackierung nicht vorgesehen und auch nicht notwendig ist. Vielmehr können entsprechend der Werkzeugoberfläche im Formwerkzeug hochglänzende, matte oder strukturierte Bauteiloberflächen erzeugt werden, wobei die IMC-TOPcoat-Schicht 10 selbst eine Einfärbung z. B. in Wagenfarbe oder auch in Kontrastfarben aufweisen kann.

Die mit der IMC-TOPcoat-Schicht 10 beschichtete SMC-Schicht 9 wird dann mit dem PHC-Träger bzw. der Verstärkungsstruktur verpresst. Man erhält ein Leichtbau Class-A-Bauteil ohne zusätzliche Lackierung.

Eine Hochglanzoberfläche erhält man entweder durch eine entsprechende Hochglanzoberfläche im Werkzeug oder durch nachträgliche Politur des Bauteiles. Zweckmäßigerweise ist dann eine größere Schichtstärke in der Größe von etwa 120 µm (0,120 mm) bis 140 µm (0,140 mm) vorgesehen.

Die äußere Kunststoff-Deckschicht 6 kann als faserhaltige Schicht auch entfallen, wenn die SMC-Schicht 9 die Struktureigenschaften der äußeren Kunststoff-Deckschicht 6 mit übernimmt. Das Verkleben der SMC-Schicht 9 direkt mit der Kernschicht 3 erfolgt dann lediglich mittels Kunststoff wie z. B. Polyurethan.

Ein Verfahren zum Herstellen eines solchen Fahrzeugaußenflächenbauteils 1 sieht vor, zunächst eine SMC-Schicht 9 inklusive einer äußeren hochqualitativen IMC-TOPcoat-Schicht 10 als Halbzeug in einem Standardherstellungsverfahren für SMC-Bauteile herzustellen.

Anschließend wird das Halbzeug (SMC-Schicht 9 mit IMC-TOPcoat-Schicht 10) in eine Werkzeughälfte eines Composite-Werkzeuges eingelegt. Falls erforderlich, wird das Halbzeug mit Vakuum an die Werkzeughälfte angesaugt.

In einem weiteren nachgelagerten Verfahrensschritt wird die Verstärkungsstruktur 2 mit noch unvernetztem Klebstoff (z. B. Polyurethan) in das Halbzeug eingepresst. In diesem Verfahrensschritt erfolgt die Formgebung der Verstärkungsstruktur 2 an der der SMC-Schicht 9 zugewandten Fläche.

Wahlweise erfolgen im Anschluss an das Entformen des Verbundbauteils oder Fahrzeugaußenflächenbauteils 1 weitere Verfahrensschritte, wie z. B. das Trimmen oder Zuschneiden der Kanten des Fahrzeugaußenflächenbauteils 1. In jedem Fall entfällt die Notwendigkeit einer nachträglichen Lackierung.

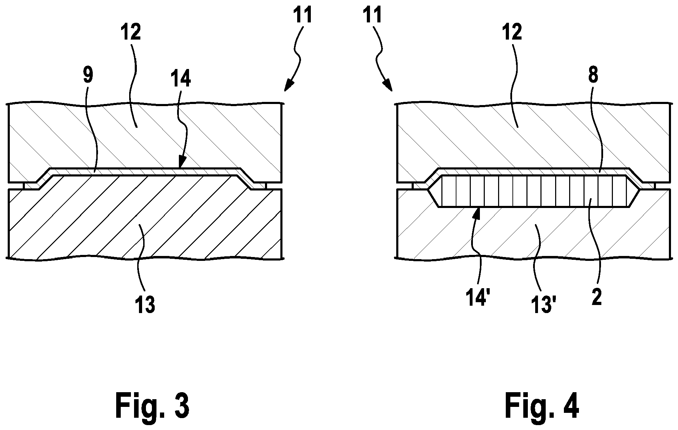

Ein weiteres alternatives Verfahren (siehe Fig. 3 und 4) stellt die Kombination eines SMC-Prozesses mit einem Composite-Prozess dar. Ein Formwerkzeug 11 weist eine erste oder obere Werkzeughälfte 12 und eine zweite oder untere Werkzeughälfte 13 auf. In einem Formhohlraum 14 zwischen den beiden Werkzeughälften 12 und 13 wird zunächst die SMC-Schicht 9 gepresst und anschließend an der späteren Bauteilaußenseite mittels der ersten oder oberen Werkzeughälfte 12 (Class-A-Werkzeughälfte) mit einer IMC-TOPcoat-Schicht 10 geflutet. Abweichend zum erstgenannten Verfahren wird das Halbzeug bzw. die Außenhautschicht 8 (die SMC-Schicht 9 mit der IMC-TOPcoat-Schicht 10) nicht aus dem Formwerkzeug 11 entnommen, sondern vielmehr wird der Gegenstempel des Formwerkzeuges 11, d. h. die untere Werkzeughälfte 13, durch eine ausgetauschte zweite Werkzeughälfte 13' zur Herstellung der finalen Composite-Geometrie ersetzt. Dies kann durch einen Tausch des Gegenstempels bzw. durch ein Shutteln oder Verfahren der Werkzeughälften 13 bzw. 13' erfolgen, wobei die SMC-Schicht 9 an der oberen Werkzeughälfte 12 verbleibt. Die ausgetauschte untere Werkzeughälfte 13' weist einen vergrößerten Formhohlraum 14' auf, in dem die die Verstärkungsstruktur 2 angeordnet wird. Im Anschluss erfolgt der Composite-Prozess, bei dem die Verstärkungsstruktur 2 gegen die SMC-Schicht 9 der Außenhautschicht 8 gepresst und mit dieser verbunden wird.

Alternativ kann auch die untere Werkzeughälfte 13 die Class-A-Werkzeughälfte sein und es können sowohl die untere Werkzeughälfte 13 wie auch die obere Werkzeughälfte 12 geshuttelt werden. Wahlweise kann die SMC-Schicht 9 auch an der unteren Werkzeughälfte 13' verbleiben und der Prozess zum Anbringen der Verstärkungsstruktur 2 kann in einem zweiten Presswerkzeug erfolgen.

Großer Vorteil dieses Verfahrens ist der Entfall zusätzlicher Handhabungsschritte zum Bewegen des Halbzeugs, die Vermeidung einer Beschädigung der späteren Oberfläche, sowie die Vermeidung einer Kontamination des Composite-Werkzeuges mit Verunreinigungen.

Die in der Beschreibung und anhand des Ausführungsbeispiels sowie in den Figuren offenbarten einzelnen Merkmale der Erfindung können in beliebigen technisch zweckmäßigen Anordnungen und Gestaltungen mit dem Erfindungsgegenstand in seiner allgemeinen Form kombiniert werden.

**Bezugszeichenliste**

| | | | |
|---|---|---|---|
| 1 | Fahrzeugaußenflächenbauteil | 10 | IMC-TOPcoat-Schicht |
| 2 | Verstärkungsstruktur | 11 | Formwerkzeug |
| 3 | Kernschicht | 12 | erste Werkzeughälfte |
| 4 | Bauteil-Außenseite | 13 | zweite Werkzeughälfte |
| 5 | Bauteil-Innenseite | 13' | ausgetauschte zweite Werkzeughälfte |
| 6 | äußere Kunststoff-Deckschicht | | |
| 7 | innere Kunststoff-Deckschicht | 14 | Formhohlraum |
| 8 | Außenhautschicht | 14' | vergrößerter Formhohlraum |
| 9 | SMC-Schicht | | |

## Patentansprüche

1. Fahrzeugaußenflächenbauteil mit einem Schichtaufbau mit einer eine Außenhautschicht (8) bildenden SMC-Schicht (9) und mit einer mit der SMC-Schicht (9) verbundenen und eine Kernschicht (3) aufweisenden Verstärkungsstruktur (2),
**dadurch gekennzeichnet,**
**dass** auf der SMC-Schicht (9) außenseitig eine IMC-TOPcoat-Schicht (10) mit Class-A-Oberflächenqualität angebracht ist, die gemeinsam mit der SMC-Schicht (9) die Außenhautschicht (8) bildet.

2. Fahrzeugaußenflächenbauteil nach Anspruch 1,
**dadurch gekennzeichnet, dass** die IMC-TOPcoat-Schicht (10) eine eine Lackierung ersetzende Schicht aus Polyurethan oder aus einem 2K Polyurethanlack ist.

3. Fahrzeugaußenflächenbauteil nach Anspruch 1 oder 2,
**dadurch gekennzeichnet, dass** die IMC-TOPcoat-Schicht (10) eine Dicke von 60 µm bis 140 µm (0,060 mm bis 0,140 mm) aufweist.

4. Fahrzeugaußenflächenbauteil nach einem der Ansprüche 1 bis 3,
**dadurch gekennzeichnet, dass** die Kernschicht (3) der Verstärkungsstruktur (2) aus einer Wabe oder einem Schaumstoff hergestellt ist, wobei insbesondere die Wabe aus Papier, Aluminium oder einem Kunststoff wie Phenolharz hergestellt ist.

5. Fahrzeugaußenflächenbauteil nach einem der Ansprüche 1 bis 4,
**dadurch gekennzeichnet, dass** die Verstärkungsstruktur (2) eine innere Kunststoff-Deckschicht (7) aufweist, die aus Polyurethan hergestellt ist und an der Kernschicht (3) auf ihrer der Außenhautschicht (8) gegenüberliegenden Innenseite angebracht ist.

6. Fahrzeugaußenflächenbauteil nach einem der Ansprüche 1 bis 5,
**dadurch gekennzeichnet, dass** die Außenhautschicht (8) mittels einer äußeren Kunststoff-Deckschicht (6), die aus Polyurethan hergestellt ist, an der der Außenhautschicht (8) zugewandten Außenseite der Kernschicht (3) angebracht ist.

7. Fahrzeugaußenflächenbauteil nach Anspruch 5 oder 6,
**dadurch gekennzeichnet, dass** die innere Kunststoff-Deckschicht (7) und/oder die äußere Kunststoff-Deckschicht (6) eine Faserverstärkung oder eine Fasermatte aufweist.

8. Verfahren zum Herstellen eines Fahrzeugaußenflächenbauteils (1), insbesondere gemäß einem der Ansprüche 1 bis 7, mit den Schritten:
a) Herstellen einer SMC-Schicht (9) inklusive einer IMC-TOPcoat-Schicht (10) mit Class-A-Oberflächenqualität als ein eine Außenhautschicht (8) bildendes Halbzeug in einem Standardherstellungsverfahren für SMC-Bauteile,
b) Einlegen der Außenhautschicht (8) in eine Werkzeughälfte eines Composite-Werkzeuges,
c) Einpressen einer die Außenhautschicht (8) tragenden Verstärkungsstruktur (2), die eine von zumindest einer Kunststoff-Deckschicht (5 bzw. 6) abgedeckte Kernschicht (3) aufweist, mit noch unvernetztem Klebstoff oder Polyurethan in die SMC-Schicht (9) der Außenhautschicht (8) unter Formgebung des Fahrzeugaußenflächenbauteils (1), und
d) Entformen des mit hochqualitativ fertiggestellter Außenhaut erzeugten Fahrzeugaußenflächenbauteils (1).

9. Verfahren nach Anspruch 8,
**dadurch gekennzeichnet, dass** im Anschluss an das Entformen des Fahrzeugaußenflächenbauteils (1) (Schritt d) zumindest ein weiterer Verfahrensschritt wie das Trimmen oder Zuschneiden der Kanten des Fahrzeugaußenflächenbauteils (1) durchgeführt wird.

10. Verfahren zum Herstellen eines Fahrzeugaußenflächenbauteils (1), insbesondere gemäß einem der Ansprüche 1 bis 7, mit den Schritten:
a) Herstellen einer SMC-Schicht (9) als Halbzeug in einem Standardherstellungsverfahren für SMC-Bauteile,
b) Einlegen der SMC-Schicht (9) in eine erste Werkzeughälfte (12) eines Formwerkzeuges (11) und Pressen der SMC-Schicht (9) mit Hilfe einer zweiten Werkzeughälfte (13),
c) Aufbringen einer IMC-TOPcoat-Schicht (10) mit Class-A-Oberflächenqualität auf die der ersten Werkzeughälfte (12) zugewandten SMC-Schicht (9) zur Bildung einer Außenhautschicht (8),
d) Austauschen der zweiten Werkzeughälfte (13) gegen eine Werkzeughälfte (13') mit vergrößertem Formhohlraum,
e) Einlegen einer die Außenhautschicht (8) tragenden Verstärkungsstruktur (2), die eine von zumindest einer Kunststoff-Deckschicht (5 bzw. 6) abgedeckte Kernschicht (3) aufweist, in den vergrößerten Formhohlraum,
f) Einpressen der Verstärkungsstruktur (2) mit noch unvernetztem Klebstoff oder Polyurethan in die SMC-Schicht (9) der Außenhautschicht (8) unter Formgebung des Fahrzeugaußenflächenbauteils (1), und
g) Entformen des mit hochqualitativ fertiggestellter Außenhaut erzeugten Fahrzeugaußenflächenbauteils (1).
